(19) **Europäisches Patentamt**
**European Patent Office**
**Office européen des brevets**

(11) **EP 2 237 231 B1**

(12) **FASCICULE DE BREVET EUROPEEN**

(45) Date de publication et mention de la délivrance du brevet:
**01.05.2013 Bulletin 2013/18**

(51) Int Cl.:
**G06T 1/00** (2006.01)

(21) Numéro de dépôt: **10165722.9**

(22) Date de dépôt: **03.01.2008**

(54) **Dispositif permettant la détermination en temps réel de données de position et d'orientation du dispositif dans une scène réelle**

Vorrichtung zur Echtzeit-Bestimmung der Positions- und Orientierungsdaten einer Vorrichtung in einer realen Szene

Device for real-time determination of position and orientation data of the device in a real stage

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.01.2007 FR 0752547**

(43) Date de publication de la demande:
**06.10.2010 Bulletin 2010/40**

(62) Numéro(s) de document de la (des) demande(s) initiale(s) en application de l'article 76 CBE:
**08761735.3 / 2 104 925**

(73) Titulaire: **Total Immersion**
**92150 Suresnes (FR)**

(72) Inventeurs:
• **LEFEVRE, Valentin**
**92800 Puteaux (FR)**
• **LIVET, Nicolas**
**75011 Paris (FR)**
• **SAVARY, Alan**
**94220 Charenton le Pont (FR)**

(74) Mandataire: **Santarelli**
**14 Avenue de la Grande Armée**
**B.P. 237**
**75822 Paris Cedex 17 (FR)**

(56) Documents cités:
**US-A1- 2002 095 081**

• **STATE A ET AL: "SUPERIOR AUGMENTED REALITY REGISTRATION BY INTEGRATING LANDMARK TRACKING AND MAGNETIC TRACKING" COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 août 1996 (1996-08-04), pages 429-438, XP000682759**
• **BAJURA M ET AL: "DYNAMIC REGISTRATION CORRECTION IN AUGMENTED-REALITY SYSTEMS" PROCEEDINGS OF THE VIRTUAL REALITY ANNUAL INTERNATIONAL SYMPOSIUM. RESEARCH TRIANGLE PARK, MAR. 11 - 15, 1995; [PROCEEDINGS OF THE VIRTUAL REALITY ANNUAL INTERNATIONAL SYMPOSIUM], LOS ALAMITOS, IEEE COMP. SOC. PRESS, US, 11 mars 1995 (1995-03-11), pages 189-196, XP000529985 ISBN: 978-0-7803-2543-2**
• **NEUMANN U ET AL: "AUGMENTED REALITY TRACKING IN NATURAL ENVIRONMENTS" MIXED REALITY. MERGING REAL AND VIRTUAL WORLDS. PROCEEDINGS OFINTERNATIONAL SYMPOSIUM ON MIX REALITY. MERGING REAL AND VIRTUALWORLDS, XX, XX, 1 janvier 1999 (1999-01-01), pages 101-130, XP001118695**

EP 2 237 231 B1

**Description**

La présente invention concerne la détermination de la position et de l'orientation d'un objet dans une scène réelle et plus particulièrement un dispositif permettant la détermination en temps réel de données de position et d'orientation du dispositif dans une scène réelle représentée par des images, ces images étant reçues par un ordinateur déterminant en temps réel des données de position et d'orientation du dispositif.

L'effet de miroir utilisant une caméra et un écran de visualisation est utilisé dans de nombreuses applications, notamment dans le domaine des jeux vidéo. Le principe de cette technologie consiste à acquérir une image en provenance d'une caméra de type *webcam* reliée à un ordinateur ou à une console. Cette image est de préférence stockée dans la mémoire du système auquel la caméra est reliée. Ensuite, un algorithme de suivi d'objet, aussi appelé *blobs tracking,* est utilisé pour calculer, en temps réel, les contours de certains éléments tels que la tête et les mains de l'utilisateur. La position de ces formes dans l'image permet de modifier ou de déformer certaines parties de l'image affichée. Cette solution permet de localiser une zone de l'image selon deux degrés de liberté.

Pour déterminer la position et l'orientation selon lesquelles un objet virtuel doit être inséré dans une image représentant une scène réelle, une solution consiste à indiquer dans la scène réelle la position et l'orientation de l'objet virtuel. Une sphère peut être utilisée à cette fin. La taille de la sphère doit être suffisante pour permettre le calcul de sa position dans un espace tridimensionnel selon la position de celle-ci dans une représentation bidimensionnelle de cet espace et selon son diamètre apparent. L'orientation de la sphère peut être évaluée en plaçant des pastilles colorées sur la surface de celle-ci. Cette solution est efficace si la sphère a une taille suffisamment importante et si le système de capture d'image est de suffisamment bonne qualité, ce qui restreint les possibilités de mouvement de l'utilisateur, en particulier ses déplacements rapides.

Ces solutions n'offrent cependant pas les performances requises pour de nombreuses applications et il existe un besoin d'améliorer les performances de tels systèmes tout en maintenant leur prix à un niveau acceptable.

Le document intitulé « Superior augmented reality registration by integrating landmark tracking and magnetic tracking », State et al., 1996, décrit une méthode de suivi hybride combinant la précision d'un suivi basé sur la vision avec la robustesse d'un suivi basé sur l'utilisation d'un capteur magnétique, sans compromettre les performances de temps réel ni les fonctionnalités. Conformément au contenu de ce document, un capteur magnétique permettant de déterminer des informations de position et d'orientation est fixé à un afficheur auquel sont également fixées des caméras. Le capteur magnétique fournit une première estimation de données de position et d'orientation qui sont ensuite affinées par analyse d'image. A ces fins, des points de repère sont identifiés et suivis dans les images d'un flux vidéo. Ces points de repère sont ici des points concentriques de deux couleurs différentes, présents dans la scène représentée par les images du flux vidéo.

La demande de brevet US 2004/0179107 décrit un capteur d'orientation dont les performances sont améliorées par analyse d'images. A ces fins, un capteur d'orientation bon marché est couplé à une caméra. Le capteur orientation est utilisé pour obtenir une orientation initiale qui est ensuite mise à jour par analyse d'images. Des caractéristiques telles que des crêtes ou des arrêtes sont extraites d'une première image correspondant à l'orientation initiale et comparées à ces mêmes caractéristiques extraites d'images suivantes pour déterminer de nouvelles orientations dans ces images. De façon périodique, une orientation issue du capteur est utilisée pour éviter des problèmes de dérive. De même, lorsqu'il n'est pas possible d'extraire ces caractéristiques d'une image courante, une orientation issue du capteur est utilisée.

L'invention permet de résoudre au moins un des problèmes exposés précédemment.

L'invention a ainsi pour objet un dispositif permettant la détermination en temps réel de données de position et d'orientation dudit dispositif dans une scène réelle représentée par des images, lesdites images étant reçues par un ordinateur déterminant en temps réel des données de position et d'orientation dudit dispositif, ce dispositif comprenant les moyens suivants,

- un élément géométrique, ledit élément géométrique étant adapté à la détermination, par analyse desdites images, d'au moins une donnée de position dudit dispositif dans ladite scène réelle lorsque ledit dispositif est visible dans lesdites images ; et,
- un capteur d'orientation, ledit capteur d'orientation déterminant au moins une donnée d'orientation dudit dispositif dans ladite scène réelle et transmettant ladite au moins une donnée d'orientation dudit dispositif audit ordinateur.

Le dispositif selon l'invention permet ainsi la détermination rapide et précise de sa position et de son orientation dans une scène réelle sans recourir à des moyens onéreux. Il permet la combinaison de résultats d'analyse d'images, utilisée pour déterminer une position, avec des données d'orientation issues d'un capteur lié à ce dispositif.

Selon un mode de réalisation particulier, ledit élément géométrique est une sphère qui est facilement visible et identifiable dans une image. De façon avantageuse, ladite sphère est colorée et son diamètre est de quelques centimètres.

La sphère est, de préférence, réalisée dans un matériau transparent ou translucide, le dispositif comprenant en outre, de préférence, une source de lumière disposée à l'intérieure de ladite sphère de telle sorte qu'elle soit facilement visible et identifiable même dans de mauvaises conditions d'éclairage.

Toujours selon un mode de réalisation particulier, ledit capteur d'orientation est un capteur capable de déterminer une orientation selon trois degrés de liberté. Un tel capteur est, par exemple, un capteur angulaire.

Toujours selon un mode de réalisation particulier, le dispositif comprend en outre un module de transmission sans fil pour transmettre ladite au moins une donnée d'orientation dudit dispositif audit ordinateur. Le dispositif est ainsi plus facilement manipulable par un utilisateur.

En outre, ledit dispositif comprend, de préférence, un manche sur lequel est fixé ledit élément géométrique, ledit dispositif étant cranté pour obliger un utilisateur à le tenir selon une direction prédéterminée. Le dispositif permet ainsi d'éviter une incertitude quant à l'orientation relative de la main d'un utilisateur par rapport à celle du capteur utilisé.

Selon un mode de réalisation particulier, le dispositif comprend en outre une source électrique, ladite source électrique alimentant au moins ledit capteur d'orientation et, de préférence, ladite source de lumière, et au moins un interrupteur relié à ladite source électrique pour contrôler l'alimentation électrique d'au moins un composant électrique dudit dispositif. Ladite source électrique est avantageusement une batterie rechargeable.

D'autres avantages, buts et caractéristiques de la présente invention ressortent de la description détaillée qui suit, faite à titre d'exemple non limitatif, au regard des dessins annexés dans lesquels :

- la figure 1 représente schématiquement un premier dispositif selon l'invention ;
- la figure 2 montre un exemple d'appareil permettant de mettre en oeuvre au moins partiellement l'invention ;
- la figure 3 illustre schématiquement un exemple du dispositif dans lequel un capteur à six degrés de liberté est utilisé ;
- la figure 4 illustre un exemple de la poignée présenté sur la figure 3 comprenant un capteur à six degrés de liberté et un contacteur de type « gâchette» ;
- la figure 5, comprenant les figures 5a et 5b, illustre un exemple de mise en oeuvre du dispositif illustré par les figures 3 et 4 ;
- la figure 6 illustre schématiquement le dispositif selon l'invention ;
- la figure 7, comprenant les figures 7a, 7b et 7c, illustre un exemple de la poignée représentée sur la figure 6. La figure 7a illustre une vue d'ensemble de la poignée tandis que les figures 7b et 7c représentent des exemples de schéma électrique de cette poignée ;
- la figure 8 illustre certaines étapes de l'algorithme utilisé pour déterminer la position 3D d'un élément géométrique dans une représentation d'une scène réelle ;
- la figure 9 représente la variation du coefficient de pondération $\alpha$ utilisé pour pondérer la saturation en fonction de la luminance lors de la conversion d'une image ; et,
- la figure 10 illustre le principe utilisé pour déterminer la distance entre une sphère et une caméra à partir d'une image issue de cette caméra.

Selon l'invention, les données relatives au positionnement et à l'orientation d'un objet virtuel devant être inséré dans une représentation d'une scène réelle sont partiellement issues d'un capteur situé dans la scène réelle.

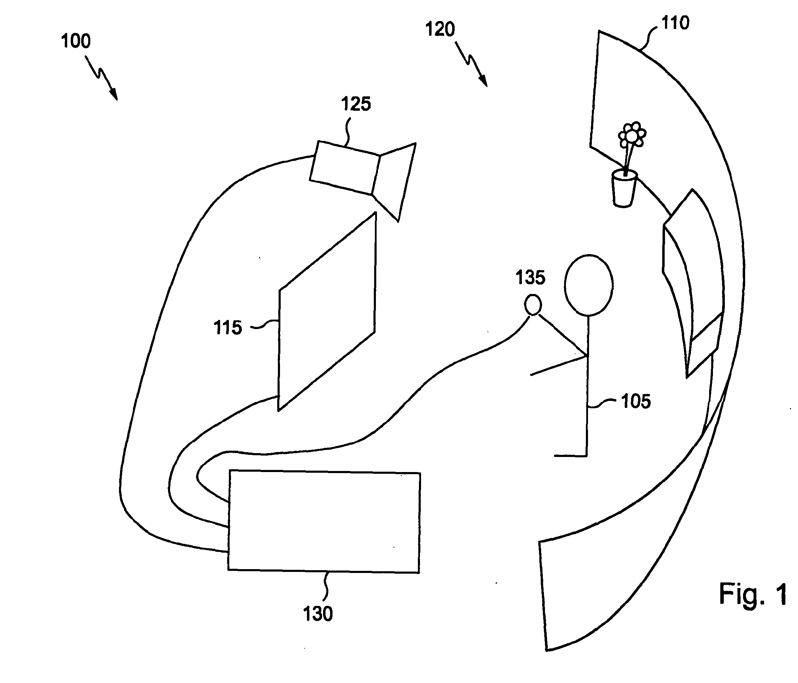

La figure 1 illustre une représentation schématique d'un premier dispositif 100 selon l'invention. Un utilisateur 105 est de préférence situé dans un environnement 110 pouvant comporter divers éléments tels que des meubles et des plantes, face à un écran 115 ayant un rôle de miroir. L'image projetée sur l'écran 115 est l'image modifiée de la scène réelle 120, filmée par la caméra vidéo 125. Le flux vidéo issu de la caméra 125 est transmis à un ordinateur 130 qui retransmet le flux vidéo issu de la caméra 125 à l'écran 115 après l'avoir modifié. L'ordinateur 130 a en particulier le rôle d'insérer un ou plusieurs objets virtuels, animés ou non, dans les images du flux vidéo issu de la caméra 125. La position et l'orientation de l'objet virtuel sont partiellement déterminées, dans la scène réelle 120, par un capteur 135 relié à l'ordinateur 130.

Le capteur 135 peut être un capteur à 6 degrés de liberté permettant de déterminer une position et une orientation (X, Y, Z, cap, tangage, roulis) dans la scène réelle 120. A titre d'illustration, ce capteur peut être le capteur « Fastrack» de la société Polhemus (Fastrack est une marque déposée). Cependant, conformément à l'invention, le capteur 135 est un capteur à 3 degrés de liberté permettant de déterminer une orientation (cap, tangage, roulis), la position du capteur (X, Y, Z) étant déterminée par analyse visuelle des images issues de la caméra 125.

Le système 100 est ainsi constitué des éléments suivants :

- un écran de visualisation (par exemple un écran LCD (*Liquid cristal display*), un écran plasma ou un écran de projection vidéo) ;
- un capteur permettant de définir une orientation selon trois degrés de liberté et optionnellement un capteur permettant de définir une position selon trois degrés de liberté ;
- une caméra vidéo située, de préférence, proche de l'écran et dans l'axe de celui-ci pour éviter des effets de parallaxe ;
- un ordinateur (par exemple un ordinateur de type PC, ou *Personal Computer*) en charge des opérations suivantes,

- acquisition vidéo en temps réel du signal vidéo en provenance de la caméra (le signal vidéo peut être, par exemple, un signal au format PAL (*Phase Alternated Line*), NTSC (*National Television System Committee*), YUV (*Luminance-Bandwidth-Chrominance*), YUV-HD (*Luminance-Bandwidth-Chrominance High Definition*), SDI (*Serial Digital Interface*) ou HD-SDI (*High Definition Serial Digital Interface*) transmis, par exemple, selon une connexion HDMI (*High-Definition Multimedia Interface*) ou USB/USB2 *(Universal Serial Bus*)) ;
- acquisition en temps réel du flux de données en provenance du capteur de mouvement et, selon le mode de réalisation, du capteur de position ;
- génération d'images de réalité augmentée, en temps réel, via la sortie de la carte graphique de l'ordinateur (cette sortie peut être, par exemple, du type VGA (*Video Graphics Array*), DVI (*Digital Visual Interface*), HDMI, SDI, HD-SDI, YUV, YUV-HD) ; et,
- opérer, de préférence, une symétrie sur l'image finale de telle sorte que le bord gauche de l'image devienne le bord droit afin de restituer l'effet « miroir ».

L'ordinateur comprend une application de réalité augmentée telle que le logiciel D'Fusion de la société Total Immersion (D'Fusion est une marque de la société Total Immersion) pour générer une scène de réalité augmentée interactive à l'aide, par exemple, des fonctions suivantes :

- acquisition en temps réel du flux de données de mouvement ; et,
- ajout en temps réel de représentations bidimensionnelles d'objets de synthèse tridimensionnels dans le flux vidéo issu de la caméra et transmission du flux vidéo modifié à l'écran de visualisation.

Le principe de ce type d'application est décrit dans la demande de brevet WO 2004/012445.

Le logiciel D'Fusion permet ainsi de visualiser en temps réel les objets de synthèse selon la position et l'orientation déterminées. L'utilisateur peut également interagir avec d'autres objets virtuels insérés dans le flux vidéo.

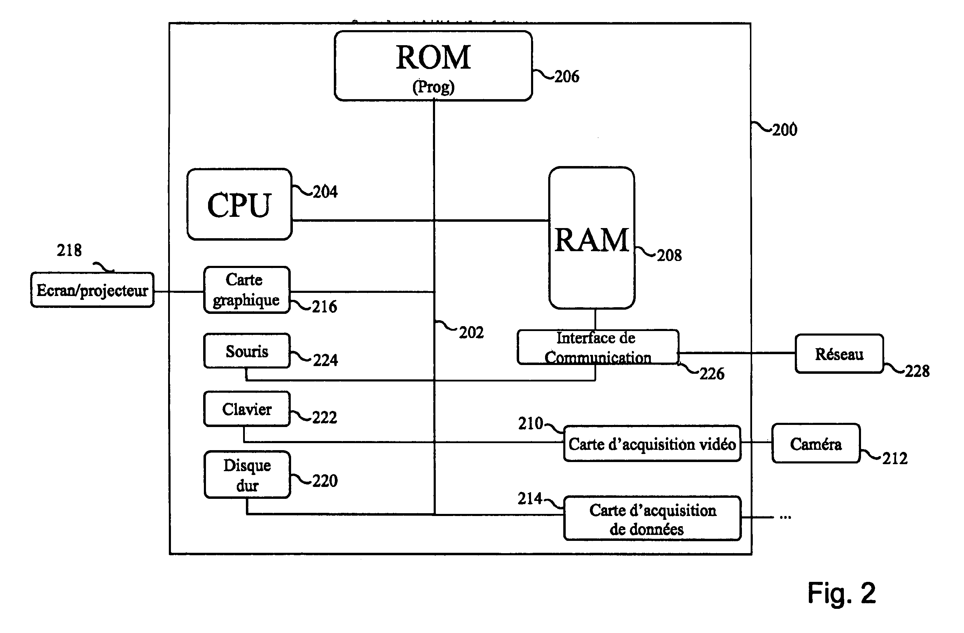

Un appareil permettant de mettre en oeuvre l'invention ou une partie de l'invention est illustré sur la figure 2. L'appareil 200 est par exemple un micro-ordinateur, une station de travail ou une console de jeux.

L'appareil 200 comporte de préférence un bus de communication 202 auquel sont reliés :

- une unité centrale de traitement ou microprocesseur 204 (CPU, *Central Processing Unit*) ;
- une mémoire morte 206 (ROM, *Read Only Memory*) pouvant comporter le système d'exploitation et des programmes tels que "Prog" ;
- une mémoire vive ou mémoire cache 208 (RAM, *Random Access Memory*) comportant des registres adaptés à enregistrer des variables et paramètres créés et modifiés au cours de l'exécution des programmes précités ;
- une carte d'acquisition vidéo 210 reliée à une caméra 212 ;
- une carte d'acquisition de données 214 reliée à un capteur (non représenté) ; et,
- une carte graphique 216 reliée à un écran ou à un projecteur 218.

Optionnellement, l'appareil 200 peut également disposer des éléments suivants :

- un disque dur 220 pouvant comporter les programmes "Prog" précités et des données traitées ou à traiter permettant la mise en oeuvre de l'invention ;
- un clavier 222 et une souris 224 ou tout autre dispositif de pointage comme un crayon optique, un écran tactile ou une télécommande permettant à l'utilisateur d'interagir avec les programmes permettant la mise en oeuvre de l'invention ;
- une interface de communication 226 reliée à un réseau de communication distribué 228, par exemple le réseau Internet, l'interface étant apte à transmettre et à recevoir des données ; et,
- un lecteur de cartes mémoires (non représenté) adapté à y lire ou à y écrire des données traitées ou à traiter permettant la mise en oeuvre de l'invention.

Le bus de communication permet la communication et l'interopérabilité entre les différents éléments inclus dans l'appareil 200 ou reliés à lui. La représentation du bus n'est pas limitative et, notamment, l'unité centrale est susceptible de communiquer des instructions à tout élément de l'appareil 200 directement ou par l'intermédiaire d'un autre élément de l'appareil 200.

Le code exécutable de chaque programme permettant à l'appareil programmable de mettre en oeuvre les processus permettant la mise en oeuvre de l'invention, peut être stocké, par exemple, dans le disque dur 220 ou en mémoire morte 206.

Selon une variante, le code exécutable des programmes pourra être reçu par l'intermédiaire du réseau de communication 228, via l'interface 226, pour être stocké de façon identique à celle décrite précédemment.

Les cartes mémoires peuvent être remplacées par tout support d'information tel que, par exemple, un disque compact (CD-ROM ou DVD). De manière générale, les cartes mémoires peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en oeuvre de l'invention.

De manière plus générale, le ou les programmes pourront être chargés dans un des moyens de stockage de l'appareil 200 avant d'être exécutés.

L'unité centrale 204 va commander et diriger l'exécution des instructions ou portions de code logiciel du ou des programmes permettant la mise en oeuvre de l'invention, instructions qui sont stockées dans le disque dur 220 ou dans la mémoire morte 206 ou bien dans les autres éléments de stockage précités. Lors de la mise sous tension, le ou les programmes qui sont stockés dans une mémoire non volatile, par exemple le disque dur 220 ou la mémoire morte 206, sont transférés dans la mémoire vive 208 qui contient alors le code exécutable du ou des programmes permettant la mise en oeuvre de l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

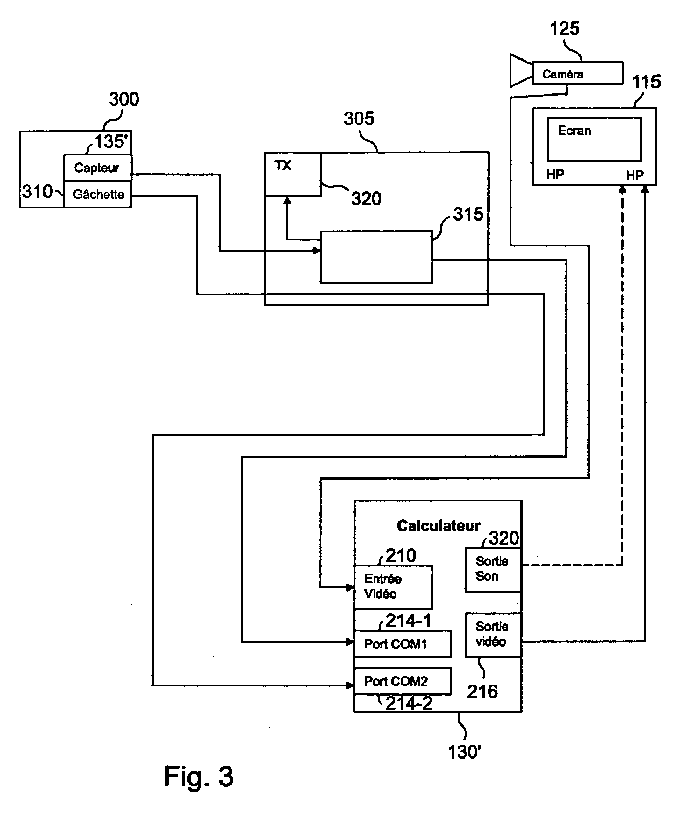

La figure 3 illustre schématiquement un exemple du dispositif, mentionné précédemment, dans lequel un capteur à six degrés de liberté est utilisé. Selon cet exemple, un écran 115 et une caméra 125 sont connectés à un ordinateur 130'. Une poignée 300 est également reliée à l'ordinateur 130' via un boîtier 305. La caméra vidéo 125 est de préférence une caméra vidéo munie d'une optique grand angle pour permettre à l'utilisateur d'être proche de l'écran. La caméra vidéo 125 est par exemple une caméra Sony HDR HC1 équipée d'un objectif Sony VCLHG0737Y.

L'ordinateur 130' comprend une carte d'acquisition vidéo 210 reliée à la caméra vidéo 125, une carte graphique 216 reliée à l'écran 115, un premier port de communication 214-1 (COM1) relié au capteur de position et d'orientation de la poignée 300 via le boîtier 305 et un second port de communication 214-2 (COM2) relié à un contacteur de type « gâchette » de la poignée 300, de préférence via le boîtier 305. Par contacteur de type « gâchette » il doit être compris un interrupteur permettant d'ouvrir ou de fermer le circuit électrique correspondant de façon ponctuelle en exerçant une pression sur la gâchette. L'utilisation d'un tel contacteur permet d'accroître l'interactivité entre l'utilisateur et le logiciel de l'ordinateur 130'. Le contacteur 310 permet, par exemple, de simuler un tir dans un logiciel de jeu. La carte d'acquisition vidéo est, par exemple, une carte Decklink PCIe. La carte graphique est une carte graphique 3D permettant d'insérer des images de synthèse dans un flux vidéo, par exemple une carte ATI X1800XL ou une carte ATI 1900XT. Bien que l'exemple illustré utilise deux ports de communication (COM1 et COM2), il doit être compris que d'autres interfaces de communication peuvent être utilisées entre l'ordinateur 130' et la poignée 300.

L'ordinateur 130' comprend avantageusement une carte son 320 reliée à des haut-parleurs (HP) intégrés dans l'écran 115. La liaison entre la carte d'acquisition vidéo 210 et la caméra vidéo 125 peut être établie selon l'une des normes suivantes : vidéo composite, SVideo, HDMI, YUV, YUV-HD, SDI, HD-SDI ou USB/USB2. De même, la liaison entre la carte graphique 216 et l'écran 115 peut être établie selon l'une des normes suivantes : vidéo composite, Svideo, YUV, YUV-HD, SDI, HD-SDI, HDMI, VGA. La liaison entre les ports de communication 214-1 et 214-2, le capteur et le contacteur de type « gâchette » de la poignée 300 peut être du type RS-232. L'ordinateur 130' est, par exemple, un PC standard équipé d'un processeur Intel Pentium IV ayant une fréquence de 3GHz, de 3Gbyte de mémoire RAM, d'un disque dur de 120Gbyte et de deux interfaces PCI express (*Peripheral Component Interconnect*) pour la carte d'acquisition et pour la carte graphique.

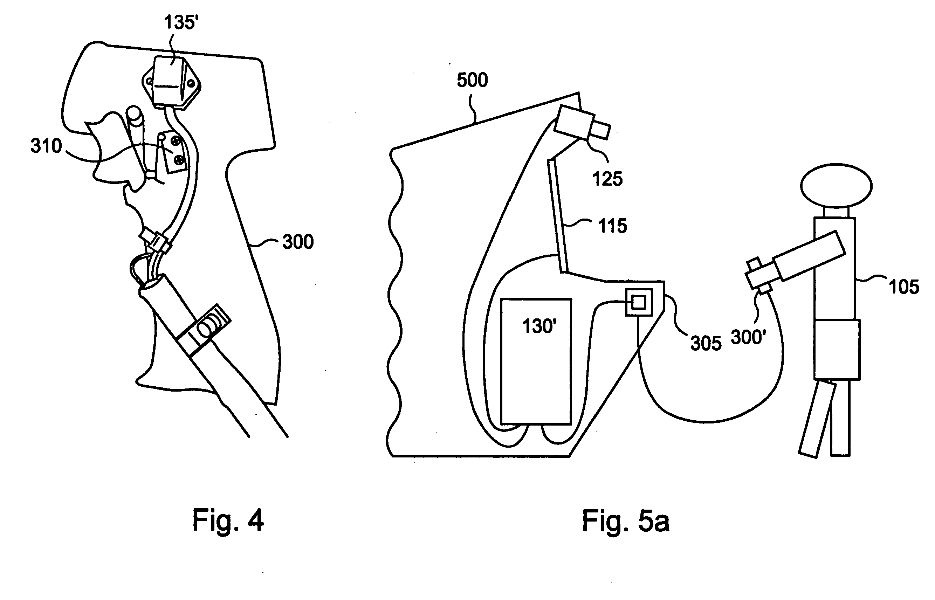

La poignée 300 comprend de préférence un capteur de position et d'orientation à six degrés de liberté 135', par exemple un capteur « Fastrack » de la société Polhemus, et un contacteur de type « gâchette » 310. Un exemple de la poignée 300 est illustré sur la figure 4.

Le boîtier 305 constitue une interface entre la poignée 300 et l'ordinateur 130'. Le boîtier 305, associé au capteur de position et d'orientation, a pour objet de transformer les signaux issus du capteur en données exploitables par l'ordinateur 130'. Le boîtier 305 comprend un module 315 de capture de mouvement et, avantageusement, un émetteur 320 permettant une transmission sans fil des signaux du capteur 135' au boîtier 305.

La figure 4 illustre un exemple de poignée 300 comprenant le capteur 135' et le contacteur de type « gâchette » 310. La poignée 300 est typiquement un pistolet utilisé pour des jeux d'arcade en salle, tel que le pistolet optique de calibre 45 commercialisé par la société Happ aux Etats-Unis d'Amérique. Le canon du pistolet est avantageusement supprimé pour obtenir une poignée et l'électronique d'origine est supprimée pour ne garder que le contacteur de type « gâchette » 310. Le capteur de position et d'orientation 135' est inséré dans la poignée. Le fil du capteur ainsi que le fil de la gâchette sont insérés dans la gaine électrique de liaison entre la poignée et le boîtier de capture 305. Un connecteur de type DB9 est avantageusement disposé à l'autre extrémité de la gaine électrique de sorte que lorsque l'utilisateur appuie sur la gâchette, le contacteur se ferme, et les broches 8 et 7 du port série sont reliées entre elles via une résistance de 4,7 K $\Omega$.

Alternativement, la gaine électrique est supprimée et un module de communication sans fil est inséré dans la poignée 300. Selon cette alternative, les données issues du capteur 135' sont transmises au boîtier 305 sans liaison filaire. Le contacteur de type « gâchette » est alors inactif à moins de la coupler également à un module de communication sans fil.

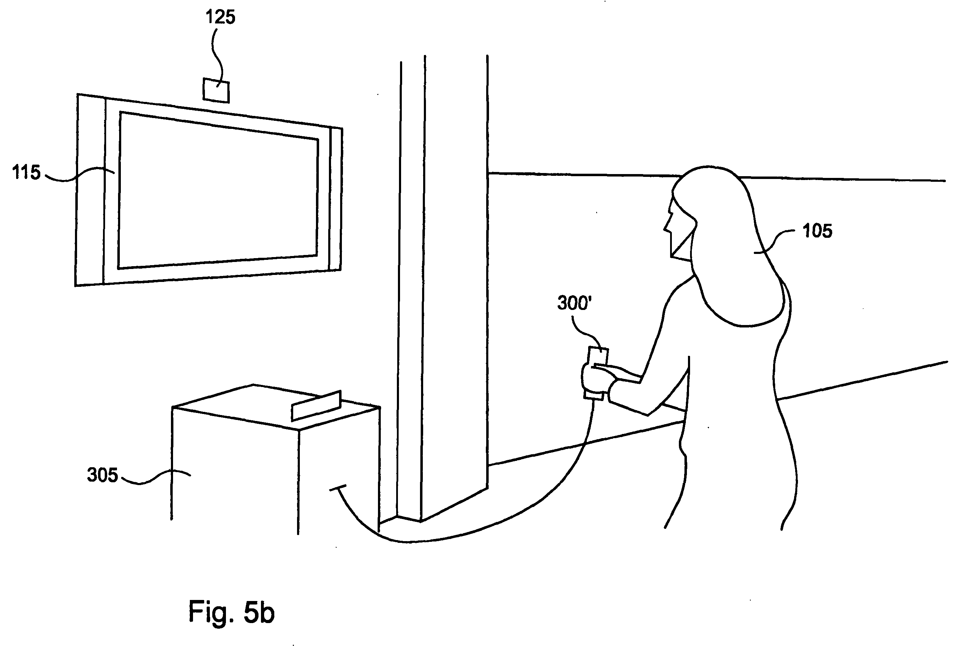

La figure 5, comprenant les figures 5a et 5b, illustre un exemple de mise en oeuvre du dispositif illustré par les figures 3 et 4 (selon le mode de réalisation dans lequel les données sont transmises par une liaison filaire entre la poignée et le boîtier de capture de mouvement). La figure 5a représente une vue de côté, en coupe, du dispositif tandis que la figure 5b illustre une vue en perspective de ce dispositif. Selon cet exemple, un utilisateur 105 se trouve face à un dispositif 500 comprenant un écran 115 situé, de préférence, face à l'utilisateur 105 et approximativement à la hauteur de ses yeux. Le dispositif 500 comprend également une caméra vidéo 125 située à proximité de l'écran 125, un boîtier de capture de mouvement 305 et un ordinateur 130' auquel sont reliés la caméra vidéo 125, l'écran 115 et le boîtier de capture de mouvement 305 tel qu'indiqué précédemment. Dans cet exemple, l'utilisateur 105 dispose d'une poignée 300' reliée au boîtier de capture de mouvement 305 par une liaison filaire.

Selon un mode de réalisation particulier, un fond de couleur uniforme, par exemple un fond bleu ou un fond vert, est placé derrière l'utilisateur. Ce fond uniforme est utilisé par le logiciel pour « détourer » l'utilisateur, c'est-à-dire pour extraire celui-ci des images issues de la caméra vidéo 115, et pour l'incruster dans une scène de synthèse ou dans un flux vidéo secondaire. Pour insérer l'utilisateur dans une scène de synthèse, le logiciel D'Fusion utilise sa capacité à effectuer une fonction de *chroma key* (incrustation d'une seconde image dans une première selon une couleur identifiée dans la première) en temps réel grâce à une fonction de *pixel shader* (nuanceur de pixels) qui effectue des traitements sur le flux vidéo en provenance de la caméra.

Alors que le dispositif décrit précédemment donne toute satisfaction en terme de résultat, le capteur de position et d'orientation à six degrés de liberté a un prix qui peut le rendre prohibitif pour un usage personnel. Pour surmonter cet inconvénient, le dispositif selon l'invention est basé sur l'usage d'un capteur de mouvement bon marché combiné avec un module de traitement d'image permettant d'obtenir la position et l'orientation du capteur selon six degrés de liberté.

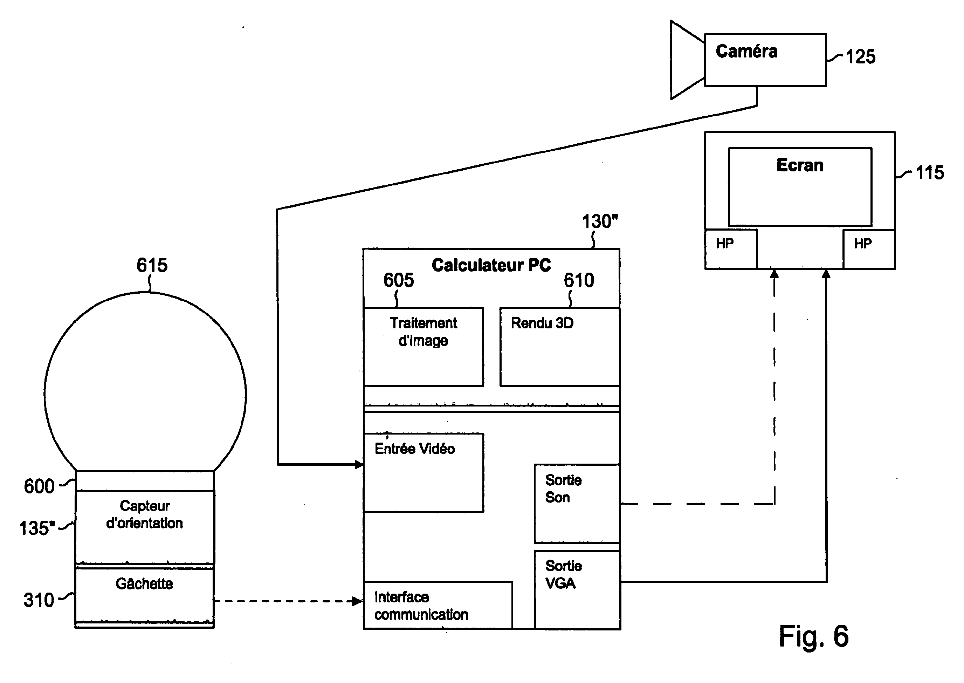

La figure 6 illustre schématiquement le dispositif selon ce mode de réalisation. Le dispositif comprend un ordinateur 130" connecté à un écran 115, une caméra vidéo 125 et une poignée 600. L'ordinateur 130" se distingue de l'ordinateur 130' en particulier en ce qu'il comprend un module de traitement d'image 605 adapté à déterminer la position de la poignée 600. Le module de rendu vidéo 610 est similaire à celui présent dans l'ordinateur 130' (non représenté) et peut également utiliser le logiciel D'Fusion. Les caractéristiques des ordinateurs 130' et 130" sont similaires. Un logiciel équivalent au logiciel D'Fusion peut être utilisé pour combiner les flux vidéo avec des objets virtuels (module de rendu 3D 610), et capturer les informations de position de la poignée par analyse d'image (module de traitement d'image 605). La caméra vidéo 125 peut être similaire à la caméra vidéo présentée précédemment ou peut être une simple *webcam.*

La poignée 600 est avantageusement reliée à l'ordinateur 130" par une liaison sans fil, sans boîtier de capture de mouvement. La poignée 600 comprend un capteur d'orientation 135" capable de déterminer l'orientation de la poignée 600 selon trois degrés de liberté. Le capteur d'orientation 135" est, par exemple, le capteur angulaire MT9B de la société Xsens ou le capteur angulaire Inertia Cube 3 de la société Intersense, dans sa version filaire ou non filaire. Les données d'orientation issues du capteur peuvent être transmises via un port COM ou par un protocole spécifique sans fil. De préférence, un ou plusieurs contacteurs de type « gâchette » 310 sont présent dans la poignée 600. La poignée 600 comprend également un élément géométrique ayant une forme particulière, permettant de localiser la poignée 600 lorsque celle-ci est visible sur une image. Cette forme géométrique est, par exemple, une sphère colorée dont le diamètre est de quelques centimètres. Cependant, d'autres formes peuvent être utilisées, notamment un cube, un plan ou un polyèdre. La poignée 600 est de préférence crantée obligeant l'utilisateur à la tenir selon une direction prédéterminée (les doigts se positionnent selon le crantage) pour permettre un positionnement cohérent du capteur angulaire.

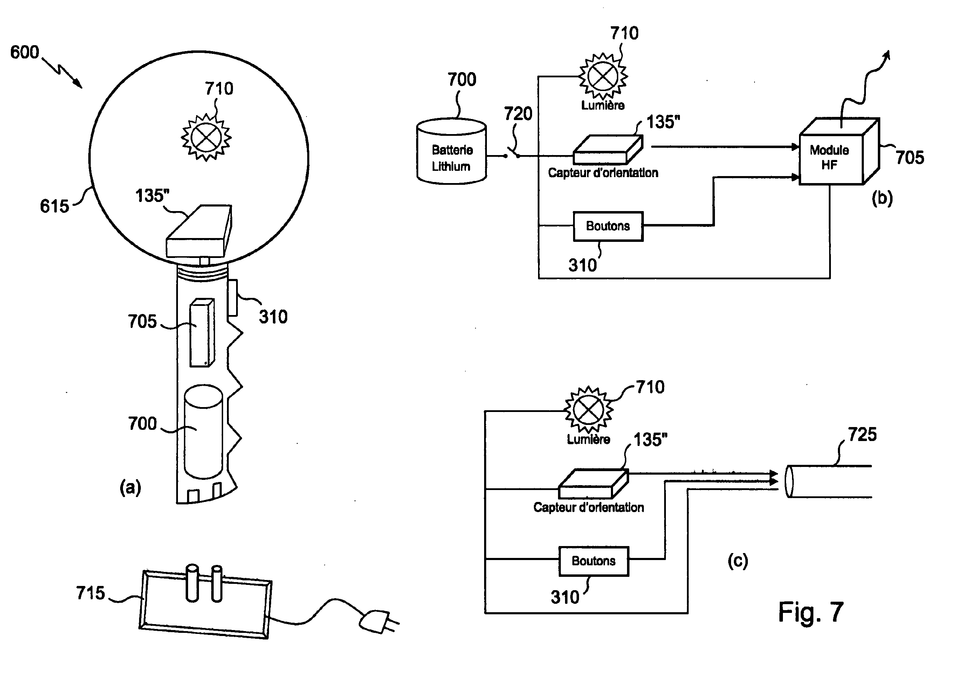

La figure 7, comprenant les figures 7a, 7b et 7c, illustre un exemple de poignée 600. La figure 7a illustre une vue d'ensemble de la poignée 600 tandis que les figures 7b et 7c représentent le schéma électrique de cette poignée.

Comme illustré, la poignée 600 comprend une partie inférieure, aussi appelée le manche, prévue pour être tenue par l'utilisateur à l'intérieure de laquelle se trouve une batterie 700, par exemple une batterie au lithium, un module de communication sans fil 705 et les contacteurs de type « gâchette » 310. Le capteur angulaire 135" est de préférence fixé sur la partie supérieure du manche. La partie supérieure du manche comprend avantageusement un filetage sur son pourtour permettant le montage de l'élément géométrique utilisé pour identifier la position de la poignée. Dans cet exemple, l'élément géométrique est la sphère 615 qui comprend une ouverture adaptée à être vissée sur la partie supérieure du manche. Il doit être compris que d'autres moyens de fixation de l'élément géométrique sur le manche peuvent être utilisés tels que le collage ou l'emboîtage. De façon avantageuse, une source de lumière telle qu'une ampoule ou une LED (*light-emitting diode*) est disposée à l'intérieur de la sphère 615 qui est de préférence constituée dans un matériau transparent ou translucide. Cette source lumineuse ainsi que l'ensemble des composants électriques de la poignée 600 sont activés à la demande de l'utilisateur ou, par exemple, dès que la poignée 600 est détachée du support 715 utilisé pour le rangement de la poignée et, avantageusement, pour le chargement de la batterie 700. Dans ce cas, le support 700 est connecté à une source électrique.

La figure 7b illustre le schéma électrique d'un premier montage des éléments électriques de la poignée 600. La batterie 700 est reliée au capteur d'orientation 135", au contacteur de type «gâchette» 310, au module de transmission sans fil 705 et à la source de lumière 710 pour leur fournir une alimentation électrique. Avantageusement, un interrupteur 720 est disposé à la sortie de la batterie 700 pour permettre de couper ou d'activer l'alimentation électrique du capteur d'orientation 135", du contacteur de type «gâchette» 310, au module de transmission sans fil 705 et de la source de lumière 710. L'interrupteur 720 peut être commandé manuellement par l'utilisateur ou automatiquement, par exemple lorsque la poignée 600 est extraite du support 715. Il est également possible de modifier le schéma de connexion de la batterie 700 pour que l'interrupteur ne contrôle que certains des éléments précités. Il est également possible d'utiliser plusieurs interrupteurs pour contrôler indépendamment ces éléments pour permettre, par exemple, d'utiliser la poignée 600 sans activer la source lumineuse 710.

Le capteur d'orientation 135" et le contacteur de type « gâchette » 310 sont reliés au module de transmission sans fil 705 pour transférer les informations issues du capteur 135" et du contacteur 310 à l'ordinateur 130". Le module de transmission sans fil 705 est par exemple un module haute fréquence (HF) tel qu'un module Bluetooth ou WiFi. Un module de communication sans fil correspondant est relié à l'ordinateur 130" pour recevoir les signaux émis par la poignée 600. Ce module peut être connecté à l'ordinateur 130" à l'aide, par exemple, d'une interface USB/USB2 ou RS-232.

Alternativement, si une liaison filaire est utilisée entre la poignée 600 et l'ordinateur 130", la poignée 600 ne nécessite ni le module de communication sans fil 715 ni la batterie 700, l'ordinateur pouvant alimenter la poignée 600 en électricité. Cette alternative est illustrée sur la figure 7c. Dans ce mode de réalisation, une gaine 725 comprenant des fils pour alimenter la poignée 600 et pour transmettre les signaux issus du capteur 135" et du contacteur 310 relie la poignée 600 à l'ordinateur 130".

La poignée 600 permet d'éviter une incertitude quant à l'orientation relative de la main par rapport à celle du capteur grâce à l'utilisation d'un crantage sur la poignée. L'élément géométrique utilisé pour déterminer la position de la poignée est aisément visible dans une image tout en permettant un grand nombre de mouvements à l'utilisateur. Cet élément géométrique peut être facilement démonté pour permettre de changer sa couleur et sa forme. Enfin, la présence d'une source lumineuse placée dans l'élément géométrique ou sur sa surface permet d'améliorer le suivi de cet objet dans des mauvaises conditions d'éclairage.

Pour déterminer la position de la poignée, l'ordinateur 130" analyse les images issues de la caméra vidéo ou de la *webcam* 125 sur lesquelles est présent l'élément géométrique de la poignée 600. Dans cette étape, il est essentiel de trouver avec précision la position du centre de l'élément géométrique dans les images issues de la caméra utilisée. La solution utilisée est basée sur un nouvel espace de couleur et une nouvelle approche de filtrage pour améliorer la qualité des résultats obtenus.

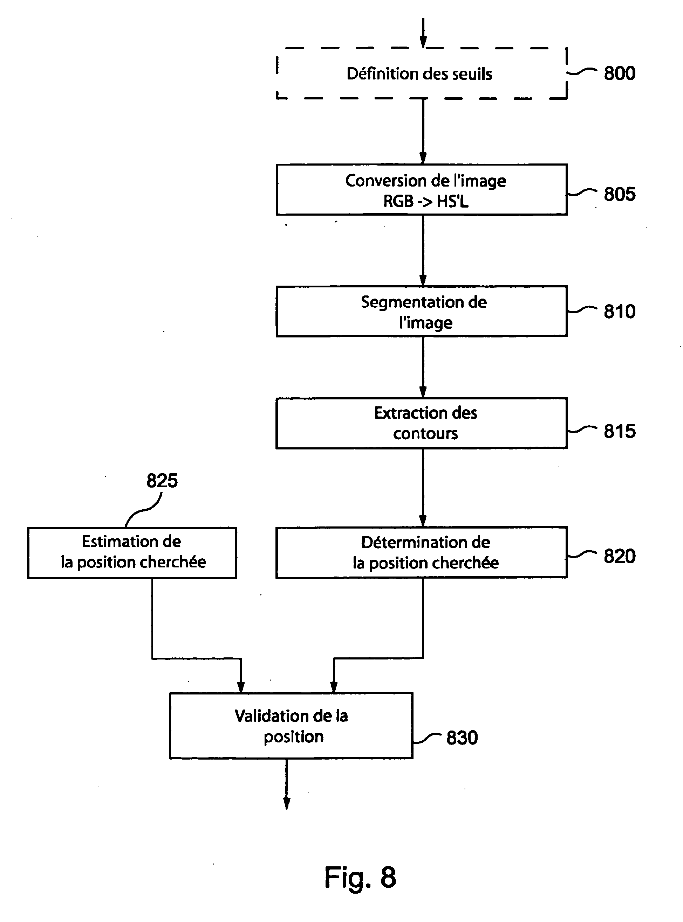

Certaines étapes de l'algorithme de recherche de la position de l'élément géométrique dans une image, illustrées sur la figure 8, sont les suivantes :

- définition de seuils selon la couleur de l'élément géométrique (étape 800). Comme indiqué par l'utilisation de lignes pointillées, il n'est pas nécessaire de définir les seuils utilisés chaque fois qu'un élément géométrique est cherché dans une image. Ces seuils peuvent être prédéterminés lors du paramétrage de la poignée et/ou réévalués si nécessaire ;
- conversion de l'image RGB (*Red-Green-Blue*) vers un espace couleur de type HS'L (étape 805), dérivé de l'espace couleur de type HSL (*Hue-Saturation-Luminance*) et recherche par segmentation de l'image des régions de pixels qui correspondent à la couleur de l'élément géométrique (étape 810) ;
- reconstruction des contours de ces régions et recherche de celle qui se rapproche le plus de la forme de l'élément géométrique à traquer (étape 815); et,
- évaluation des dimensions de l'objet dans l'image afin de retrouver sa profondeur en fonction des dimensions mesurées initialement, recherche et calcul de la position du centre de l'élément géométrique dans l'image (étape 820).

Pour améliorer la précision des résultats obtenus, il est préférable d'estimer la position recherchée de façon théorique (étape 825) par extrapolation linéaire de la position de l'élément géométrique dans le temps et de comparer la position estimée avec la position obtenue par analyse d'image (étape 830).

Le principe de détermination de la position de l'élément géométrique consiste, dans un premier temps, à détecter les zones de l'image dont la couleur correspond à celle de l'élément géométrique recherché. Pour s'affranchir de la variabilité de luminosité, l'espace de couleur HSL est préféré à l'espace de couleur RGB.

Après avoir converti une image RGB en image HSL, tous les pixels sont sélectionnés et les pixels dont la luminance L n'est pas dans un intervalle prédéfini $[\theta L_{inf} ; \theta L_{sup}]$ sont désélectionnés. La désélection d'un pixel peut être réalisées, par exemple, en imposant des valeurs nulles pour la luminance L, la saturation S et la teinte H. Ainsi, tous les pixels sélectionnés ont des valeurs non nulles tandis que les pixels désélectionnés ont des valeurs nulles.

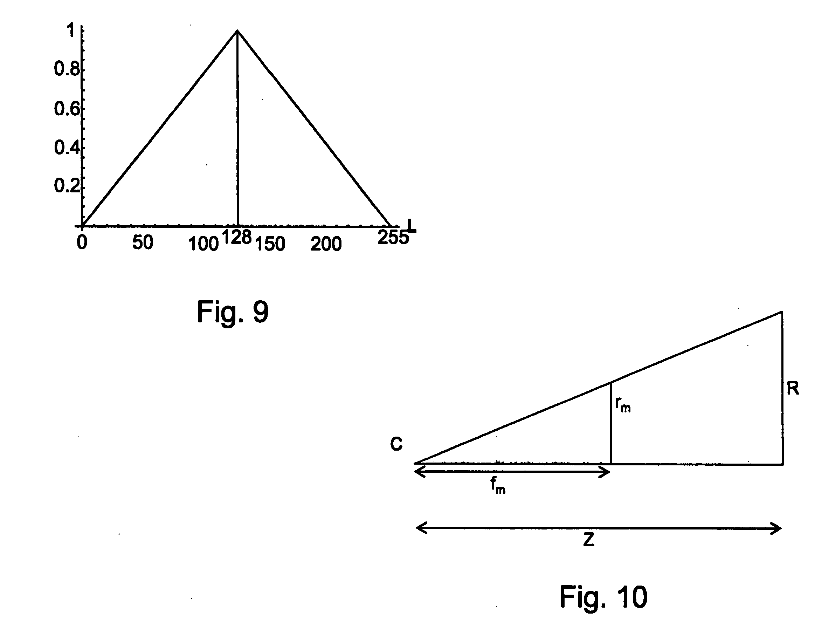

La segmentation d'une image utilisant un espace de couleur HSL donne des résultats qui ne sont pas entièrement satisfaisants en raison du fait qu'un pixel très sombre ou très clair (mais ni noir, ni blanc) peut avoir quasi n'importe quelle valeur de teinte (et en changer rapidement à cause du bruit généré dans l'image lors de l'acquisition) et donc avoir une teinte proche de celle recherchée. Pour éviter cet inconvénient, l'espace de couleur HSL est modifié pour ne pas prendre en compte les pixels trop sombres ou trop clairs. Pour cela, une nouvelle saturation S' est créée. La saturation S' est dérivée de la saturation S à l'aide d'un coefficient de pondération $\alpha$ lié la luminance L selon la relation suivante $S'= \alpha S$. Le coefficient de pondération $\alpha$ a de préférence une valeur comprise entre zéro et un. La figure 9 illustre la valeur du coefficient de pondération $\alpha$ en fonction de la luminance.

Les pixels dont la saturation S' n'est pas supérieure à un seuil prédéfini $\theta S'_{inf}$ sont ensuite désélectionnés. De même, les pixels dont la teinte H ne correspond pas à la teinte de l'élément géométrique, c'est-à-dire les pixels n'appartenant pas à un intervalle $[\theta H_{inf}; \theta H_{sup}]$ prédéterminé selon la teinte de l'élément géométrique, sont désélectionnés. Il convient de noter que la teinte est en théorie exprimée en degré, variant de 0 à 360°. En effet, la teinte est une notion cyclique le « rouge » étant au deux extrémités (0 et 360). D'un point de vue pratique 360 ne pouvant pas être codé sur un octet, la valeur de la teinte est recodée, selon les applications visées, sur les intervalles [0,180[, [0,240[ ou [0,255]. Pour optimiser le coût de calcul, l'intervalle [0,180[ est préféré. Il convient cependant de noter que la perte engendrée par le changement d'échelle n'a pas d'effet important sur les résultats.

La désélection des pixels est de préférence réalisée selon l'ordre luminance L, saturation S' puis teinte H. Cependant, la phase essentielle est la segmentation selon la teinte H. La segmentation selon la luminance et la saturation permet d'améliorer la qualité du résultat ainsi que les performances globales, notamment en ce qu'elle permet d'optimiser le temps de calcul.

Une partie de la sélection des pixels de l'image représente l'élément géométrique. Pour identifier cette partie, une étape d'extraction de contours est mise en oeuvre. Cette phase consiste à extraire les contours des groupes de pixels non nuls en utilisant, par exemple, un masque de convolution. Il convient de noter ici qu'il existe de nombreux algorithmes d'extraction de contours.

Il est ensuite nécessaire de déterminer parmi les contours celui qui se rapproche le plus de la forme de l'élément géométrique utilisé, ici un contour circulaire, l'élément géométrique utilisé étant une sphère.

Tous les contours dont la taille, exprimée en nombre de pixels, est trop faible pour représenter un cercle de taille exploitable sont désélectionnés. Cette sélection est réalisée selon un seuil $\theta_T$ prédéterminé. De même, tous les contours dont l'aire, également exprimée en nombre de pixels, est trop faible sont supprimés. Cette sélection est à nouveau réalisée selon un seuil $\theta_A$ prédéterminé.

Ensuite, pour chacun des contours restants, le cercle de rayon minimal englobant le contour est calculé puis le ratio entre l'aire déterminée par le contour et le rayon du cercle calculé est évalué. Il est alors considéré que le contour cherché est celui offrant le plus grand ratio. Ce ratio tend à représenter le fait que le contour rempli au maximum le cercle qui l'englobe et donc favorise simultanément les contours à tendance circulaire et les contours de plus fort rayon. Ce critère présente l'avantage d'un coût de calcul relativement faible. Naturellement, le critère de sélection doit être adapté à la forme de l'élément géométrique.

Les segmentations colorimétriques et géométriques permettent d'obtenir un cercle représentant approximativement la projection de la sphère associée à la poignée dans l'image. Un avantage de cette solution est que si la forme et la couleur de l'élément géométrique sont uniques dans l'environnement, la reconnaissance de cette forme est robuste aux occlusions partielles.

La position de l'élément géométrique dans l'espace dans lequel il se trouve est ensuite déterminée à partir de sa projection dans l'image. Pour simplifier les calculs il est ici supposé que l'élément géométrique est situé sur l'axe optique de la caméra dont est issue l'image. En réalité, la projection d'une sphère donne en générale une ellipse. Le cercle n'est obtenu que lorsque la sphère se situe sur l'axe optique. Cependant, une telle approximation est suffisante pour déterminer la position de la sphère grâce à son rayon apparent par un simple rapport de proportionnalité.

La figure 10 illustre le principe utilisé pour déterminer la distance de la sphère. C est le centre optique, c'est-à-dire le centre de projection correspondant à la position de la caméra, R est le rayon physique de la sphère située à une distance Z de la caméra. Par projection, ce rayon R est transformé en un rayon apparent $r_m$ situé sur le plan écran à une distance $f_m$ qui représente la distance focale métrique. Il en résulte, selon le théorème de Thalès, la relation suivante,

$$\frac{f_m}{Z} = \frac{r_m}{R} \text{ soit, } Z = R \cdot \frac{f_m}{r_m}$$

Il convient par ailleurs de noter que le ratio $\dfrac{f_m}{r_m}$ est égal au ratio $\dfrac{f_p}{r_p}$

où $f_p$ est la focale exprimée en pixel et $r_p$ est le rayon apparent de la sphère également exprimé en pixels. Il s'en déduit la relation suivante,

$$Z = \left(f_p \cdot R\right) \cdot \frac{1}{r_p}$$

La projection d'un point de coordonnées (x, y, z) dans un repère dont l'origine est la caméra en coordonnées (u, v) dans l'image prise par la caméra s'exprime de la façon suivante,

$$\begin{cases} u = f_p \cdot \dfrac{x}{z} + p_x \\[2mm] v = f_p \cdot \dfrac{y}{z} + p_y \end{cases}$$

où ($p_x$, $p_y$) est la position, en pixels, du centre optique dans l'image. Cette relation permet d'en déduire les coordonnées réelles X et Y de la sphère lorsque sa coordonnée réelle Z et ses coordonnées u et v dans l'image, en pixels, sont connues,

$$\begin{cases} X = \left(u - p_x\right) \cdot \dfrac{Z}{f_p} \\[2mm] Y = \left(v - p_y\right) \cdot \dfrac{Z}{f_p} \end{cases}$$

Il est important de noter que la qualité de l'estimation du rayon de la sphère a une grande influence sur la qualité du positionnement Z qui, par conséquent, influe sur la qualité du positionnement X et Y (qui sont de surcroît aussi influencés par la qualité de la position 2D estimée du cercle). Cette erreur en Z peut être grande métriquement mais aussi visuellement car l'objet virtuel associé au capteur est en général plus gros que la sphère et, par conséquent, une erreur par surestimation du rayon démultiplie d'autant la taille apparente de l'objet virtuel inséré dans l'image que cet objet est plus grand (métriquement) que la sphère.

Un problème important dans la recherche de la position réelle de l'élément géométrique vient du manque de stabilité temporelle de la position (u, v) et du rayon du cercle estimés. Ce problème se traduit en effet par une vibration importante de la position X, Y et Z de l'objet virtuel associé au capteur. Pour filtrer ces vibrations, un filtrage particulier est utilisé.

Ce filtrage est basé sur le principe qu'une prédiction à base de filtre passe-bas peut être réalisée et que si cette prédiction est assez proche de la nouvelle mesure alors cette valeur filtrée est appliquée. Dès que la prédiction s'écarte de la mesure, une phase « attentiste » est mise en oeuvre pour vérifier si l'écart n'existe que sur une image isolée du flux vidéo ou si cet écart se confirme dans le temps. La valeur filtrée issue de la prédiction est appliquée. Si le premier écart est confirmé la valeur réelle de la mesure est appliquée avec un retard d'une image dans le flux vidéo. Le filtrage passe-bas est réalisé en utilisant une régression linéaire orthogonale (la régression quadratique orthogonale apportant des résultats de moindre qualité) sur les n dernières mesures (en excluant celles considérées comme anormales). La valeur de n est variable avec une valeur qui augmente jusqu'à un seuil prédéterminé tant que les prédictions sont conformes. Dès qu'une prédiction n'est plus conforme, suite à une variation confirmée par l'image suivante, la valeur de n chute à 4 pour un filtrage minimal. Cette technique permet une meilleur réactivité du filtrage et part du principe que les vibrations sont d'autant plus visibles que le rayon est censé être plutôt constant. Par contre, en mouvement, les vibrations sont peu perceptibles et il est donc possible de diminuer la latence.

Les équation suivantes détaillent le calcul de régression orthogonale linéaire avec une droite d'équation y=a x + b, avec x correspondant à la valeur de la trame courante et y à la valeur des 3 paramètres u, v, et le rayon apparent de la sphère, devant être filtrer, chacun indépendamment.

L'erreur entre la régression orthogonale linéaire et la mesure du point $p_i(x_i, y_i)$ peut s'exprimer sous forme de la relation suivante,

$$e_i = (ax_i + b) - y_i$$

Il est ainsi nécessaire de minimiser l'erreur quadratique totale E qui peut s'exprimer selon la relation suivante,

$$E = \sum_{i=1}^{n} e_i^2 = \sum_{i=1}^{n} [(ax_i + b) - y_i]^2 = \sum_{i=1}^{n} [(ax_i + b)^2 - 2(ax_i + b)y_i + y_i^2]$$

en posant,

$$sx2 = \sum_{i=1}^{n} x_i^2, \ sx = \sum_{i=1}^{n} x_i, \ sxy = \sum_{i=1}^{n} x_i y_i, \ sy = \sum_{i=1}^{n} y_i \ \text{et} \ sy2 = \sum_{i=1}^{n} y_i^2$$

il en résulte que,

$$E = a^2 sx2 + 2absx + b^2 n - 2asxy - 2bsy + sy2$$

La fonction E étant une fonction quadratique, elle admet son minimum lorsque,

$$\begin{cases} \dfrac{\partial E}{\partial a} = 0 \\ \dfrac{\partial E}{\partial b} = 0 \end{cases}$$

Par conséquent,

$$\begin{cases} a = \dfrac{(sxy \cdot n - sx \cdot sy)}{\det} \\ b = \dfrac{(sx2 \cdot sy - sx \cdot sxy)}{\det} \end{cases}$$

avec det = $sx2 \cdot n - sx^2$

Pour chaque image du flux vidéo issu de la caméra, les valeurs a et b sont estimées afin de prédire une valeur pour les coordonnées (u, v) et pour le rayon apparent de la sphère, afin d'en déduire les coordonnées (x, y, z) de la sphère dans la scène réelle. Ces valeurs estimées sont utilisées comme référence et sont comparées aux valeurs déterminées selon l'analyse de l'image comme décrit précédemment. Selon le résultat de la comparaison, les valeurs déterminées selon l'analyse de l'image sont utilisées à la place des valeurs prédites ou non.

Lorsque la position et l'orientation de l'objet virtuel sont déterminées dans la scène réelle, le logiciel de réalité augmentée, par exemple D'Fusion, détermine l'image de l'objet virtuel devant être insérée à partir du modèle tridimensionnel de cet objet. Cette image de l'objet virtuel est ensuite insérée dans l'image de la scène réelle.

Le processus de détermination de la position et de l'orientation de l'objet virtuel dans la scène réelle, de détermination de l'image de l'objet virtuel et d'insertion de l'image de l'objet virtuel dans une image de la scène réelle est répété pour chaque image du flux vidéo issu de la caméra.

Le logiciel de réalité augmentée peut également être couplé à un jeu permettant ainsi à l'utilisateur de se voir « dans » le jeu.

Naturellement, pour satisfaire des besoins spécifiques, une personne compétente dans le domaine de l'invention pourra appliquer des modifications dans la description précédente. En particulier, il n'est pas impératif d'utiliser un capteur, présent dans la scène réelle, ayant au moins trois degrés de liberté. La seule contrainte est que les données issues du capteur soient complémentaires des données issues de l'analyse d'image. Il est ainsi possible d'utiliser, par exemple, un capteur ayant deux degrés de liberté et d'obtenir les informations liées aux quatre autres degrés de liberté par analyse d'image. De même, la poignée comprenant le capteur de position et d'orientation peut prendre d'autres formes que celles décrites.

**Revendications**

1.  Dispositif (600) permettant la détermination en temps réel de données de position et d'orientation dudit dispositif dans une scène réelle représentée par des images, lesdites images étant reçues par un ordinateur (130") déterminant en temps réel des données de position et d'orientation dudit dispositif, ce dispositif étant **caractérisé en ce qu'**il comprend les moyens suivants,

    - un élément géométrique (615), ledit élément géométrique étant adapté à la détermination, par analyse desdites images, d'au moins une donnée de position dudit dispositif dans ladite scène réelle lorsque ledit dispositif est visible dans lesdites images ; et,
    - un capteur d'orientation (135") couplé audit élément géométrique, ledit capteur d'orientation déterminant au moins une donnée d'orientation dudit dispositif dans ladite scène réelle et transmettant ladite au moins une donnée d'orientation dudit dispositif audit ordinateur.

2.  Dispositif selon la revendication précédente selon lequel ledit élément géométrique est une sphère.

3.  Dispositif selon la revendication précédente selon lequel ladite sphère est colorée et selon lequel le diamètre de ladite sphère est de quelques centimètres.

4.  Dispositif selon la revendication 2 ou la revendication 3 selon lequel ladite sphère est réalisée dans un matériau transparent ou translucide.

5.  Dispositif selon la revendication 4 comprenant en outre une source de lumière (710) disposée à l'intérieure de ladite sphère.

6.  Dispositif selon l'une quelconque des revendications précédentes selon lequel ledit capteur d'orientation est un capteur capable de déterminer une orientation selon trois degrés de liberté.

7.  Dispositif selon l'une quelconque des revendications précédentes selon lequel ledit capteur d'orientation est un capteur angulaire.

8.  Dispositif selon l'une quelconque des revendications précédentes comprenant en outre un module (705) de transmission sans fil pour transmettre ladite au moins une donnée d'orientation dudit dispositif audit ordinateur.

9.  Dispositif selon l'une quelconque des revendications précédentes, ledit dispositif comprenant en outre un manche sur lequel est fixé ledit élément géométrique, ledit dispositif étant cranté pour obliger un utilisateur à le tenir selon une direction prédéterminée.

10.  Dispositif selon l'une quelconque des revendications précédentes comprenant en outre une source électrique (700), ladite source électrique alimentant au moins ledit capteur d'orientation.

11.  Dispositif selon la revendication 10, dépendante de la revendication 5, selon lequel ladite source électrique alimente ladite source de lumière.

12.  Dispositif selon la revendication 10 ou la revendication 11 comprenant en outre au moins un interrupteur (720) pour contrôler l'alimentation électrique d'au moins un composant électrique dudit dispositif.

**13.** Dispositif selon l'une quelconque des revendications 10 à 12 selon lequel ladite source électrique est une batterie rechargeable.

## Claims

**1.** A device (600) enabling the determination in real time of position and orientation data of said device in a real scene represented by images, said images being received by a computer (130") determining, in real time, position and orientation data of said device, said device being **characterized in that** it comprises the following means,

- a geometric element (615), said geometric element being adapted for the determination, by analysis of said images, of at least one item of position data of said device in said real scene when said device is visible in said images; and,
- an orientation sensor (135") coupled to said geometric element, said orientation sensor determining at least one item of orientation data of said device in said real scene and sending said at least one item of orientation data of said device to said computer.

**2.** A device according to the preceding claim in which said geometric element is a sphere.

**3.** A device according to the preceding claim in which said sphere is coloured and in which said sphere is a few centimeters in diameter.

**4.** A device according to claim 2 or claim 3 in which said sphere is produced from a transparent or translucent material.

**5.** A device according to claim 4, further comprising a light source (710) disposed inside said sphere.

**6.** A device according to any one of the preceding claims in which said orientation sensor is a sensor capable of determining an orientation according to three degrees of freedom.

**7.** A device according to any one of the preceding claims in which said orientation sensor is an angle sensor.

**8.** A device according to any one of the preceding claims further comprising a wireless transmission module (705) for transmitting said at least one item of orientation data of said device to said computer.

**9.** A device according to any one of the preceding claims, said device further comprising a handle on which is fastened said geometric element, said device being notched to oblige a user to hold it in a predetermined direction.

**10.** A device according to any one of the preceding claims further comprising an electricity source (700), said electricity source supplying at least said orientation sensor.

**11.** A device according to claim 10, dependent from claim 5, in which said electricity source supplies said light source.

**12.** A device according to claim 10 or claim 11 further comprising at least one switch (720) to control the electricity supply of at least one electrical component of said device.

**13.** A device according to any one of claims 10 to 12 in which said electrical source is a rechargeable battery.

## Patentansprüche

**1.** Vorrichtung (600) zur Echtzeit-Bestimmung der Positions- und Orientierungsdaten der Vorrichtung in einer realen Szene, die mit Bildern dargestellt wird, wobei die Bilder von einem Rechner (130") empfangen werden, der in Echtzeit Positions- und Orientierungsdaten der Vorrichtung bestimmt, wobei diese Vorrichtung **dadurch gekennzeichnet ist, dass** sie die nachfolgenden Mittel aufweist:

- ein geometrisches Element (615), wobei das geometrische Element auf die Bestimmung zumindest einer Positionsangabe der Vorrichtung in der realen Szene durch Analyse der Bilder, wenn die Vorrichtung in den Bildern sichtbar ist, abgestimmt ist und

- einen Orientierungssensor (135"), der an das geometrische Element gekoppelt ist, wobei der Orientierungssensor zumindest eine Orientierungsangabe der Vorrichtung in der realen Szene bestimmt und die zumindest eine Orientierungsangabe der Vorrichtung an den Rechner überträgt.

2. Vorrichtung nach dem vorangehenden Anspruch, wobei das geometrische Element eine Kugel ist.

3. Vorrichtung nach dem vorangehenden Anspruch, wobei die Kugel eingefärbt ist und der Durchmesser der Kugel einige Zentimeter beträgt.

4. Vorrichtung nach Anspruch 2 oder Anspruch 3, wobei die Kugel aus einem transparenten bzw. lichtdurchlässigen Material ausgebildet ist.

5. Vorrichtung nach Anspruch 4, ferner enthaltend eine Lichtquelle (710), die im Inneren der Kugel angeordnet ist.

6. Vorrichtung nach einem der vorangehenden Ansprüche, wobei der Orientierungssensor ein Sensor ist, der eine Orientierung in drei Freiheitsgraden bestimmen kann.

7. Vorrichtung nach einem der vorangehenden Ansprüche, wobei der Orientierungssensor ein Winkelsensor ist.

8. Vorrichtung nach einem der vorangehenden Ansprüche, ferner enthaltend ein Modul (705) zur drahtlosen Übertragung, um die zumindest eine Orientierungsangabe von der Vorrichtung zum Rechner zu übertragen.

9. Vorrichtung nach einem der vorangehenden Ansprüche, wobei die Vorrichtung ferner eine Haltstange enthält, an der das geometrische Element befestigt ist, wobei die Vorrichtung profiliert ist, um einen Benutzer dazu zu zwingen, diese in einer vorbestimmten Richtung zu halten.

10. Vorrichtung nach einem der vorangehenden Ansprüche, ferner enthaltend eine Stromquelle (700), wobei mit der Stromquelle zumindest der Orientierungssensor gespeist wird.

11. Vorrichtung nach Anspruch 10 in Abhängigkeit von Anspruch 5, wobei mit der Stromquelle die Lichtquelle gespeist wird.

12. Vorrichtung nach Anspruch 10 oder Anspruch 11, ferner enthaltend zumindest einen Schalter (720), um die Stromversorgung von zumindest einem elektrischen Bauteil der Vorrichtung zu steuern.

13. Vorrichtung nach einem der Ansprüche 10 bis 12, wobei die Stromquelle eine wiederaufladbare Batterie ist.

Fig. 1

Fig. 2

EP 2 237 231 B1

Fig. 3

Fig. 5a

Fig. 4

Fig. 5b

EP 2 237 231 B1

Fig. 6

EP 2 237 231 B1

Fig. 7

Fig. 8

Fig. 9

Fig. 10

**EP 2 237 231 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040179107 A

- WO 2004012445 A

**Littérature non-brevet citée dans la description**

- **STATE et al.** *Superior augmented reality registration by integrating landmark tracking and magnetic tracking,* 1996